# EUROPEAN PATENT SPECIFICATION

(11) **EP 3 726 029 B1**
(45) Date of publication and mention of the grant of the patent: **04.09.2024**
(21) Application number: 20167315.9
(22) Date of filing: 31.03.2020
(51) Int. Cl.: F02C 7/14, F02C 7/224, F28F 3/02, F28F 3/04, F28D 9/00, F28D 21/00

(54) **COMPACT MULTI-PASS HEAT EXCHANGER**
KOMPAKTER MEHRFLUTIGER WÄRMETAUSCHER
ÉCHANGEUR DE CHALEUR COMPACT À PASSAGES MULTIPLES

(30) Priority: 17.04.2019 US 201962835055 P
(43) Date of publication of application: 21.10.2020
(73) Proprietor: RTX Corporation, Farmington, CT 06032 (US)
(72) Inventor: RIBAROV, Lubomir A., West Hartford, CT 06107 (US)
(74) Representative: Dehns

(56) References cited:
- EP-A2- 2 357 329
- WO-A1-2015/071933
- WO-A2-2010/115246
- US-A- 6 044 902
- US-A1- 2017 299 287

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Aircraft engines are increasingly incorporating electric devices that increase the number and magnitude of heat loads that require management. Heat exchangers are employed that utilize fuel as a heat sink. Air and lubricant are cooled for use in various different engine systems by the fuel. The size and thermal transfer efficiency of a heat exchanger can impact engine design and performance.

Turbine engine manufacturers continue to seek further improvements to engine performance including improvements to thermal transfer efficiencies. For example, US 2017/299287 A1 describes a heat exchanger which includes a first side of a heat exchanger layer with a first flow path for a coolant. The first flow path flows through a heat soak region and a flow region. The heat exchanger also includes a second side of the heat exchanger layer with a second flow path for a fluid to be cooled. The second flow path is in thermal communication with the first flow path, and an inlet of the first flow path and an inlet of the second flow path are proximate in the heat soak region.

### SUMMARY

A heat exchanger for a gas turbine engine according to an aspect of the present invention has the features of claim 1.

In an embodiment of any of the above embodiments, a direction of a flow of the coolant medium through the first cool portion is counter to a direction of a first hot flow in the first cool portion.

In an embodiment of any of the above embodiments, the more spacer bars in the first cool portion than the second cool portion defines more parallel turning passes in the first cool portion than the second cool portion.

In an embodiment of the above embodiment, a mitered portion including an angled interface with a corresponding channel defines each turning pass.

In an embodiment of any of the above embodiments, the first inlet and the first outlet of the second plate are on a side of the second plate opposite the second inlet and the second outlet.

In an embodiment of any of the above embodiments, each of the first plate and the second plate include passages or channels defining a path of fluid flow and the passages or channels have a herringbone pattern wherein a herring bone pattern is a wavy pattern of walls that increases a surface area for thermal transfer through the first and second plates.

In an embodiment of any of the above embodiments, the coolant medium comprises fuel.

In an embodiment of any of the above embodiments, the coolant medium comprises one of a hydraulic fluid, refrigerant and/or airflow.

In an embodiment of any of the above embodiments, the flow of air is communicated through first hot portion and the flow of oil is communicated through the second hot portion.

In an embodiment of any of the above embodiments, a plurality of first plates and a plurality of second plates alternate such that each of the plurality of second plates is disposed between a pair of the plurality of first plates.

In an embodiment of any of the above embodiments, each of the plurality of first plates are orientated such that each coolant inlet and each coolant outlet for each of the plurality of first plates are disposed on a common side.

A thermal management system for a gas turbine engine according to an aspect of the present invention has the features of claim 10.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an embodiment of a gas turbine engine according to the present invention.
Figure 2 is a schematic view of an embodiment of a first plate of a disclosed a heat exchanger embodiment according to the present invention.
Figure 3 is a schematic view of an example second plate of a disclosed heat exchanger embodiment according to the present invention.
Figure 4 is an exploded view of an embodiment of a heat exchanger embodiment according to the present invention.
Figure 5 is a perspective view of the embodiment of a heat exchange embodiment according to the present invention.

### DETAILED DESCRIPTION

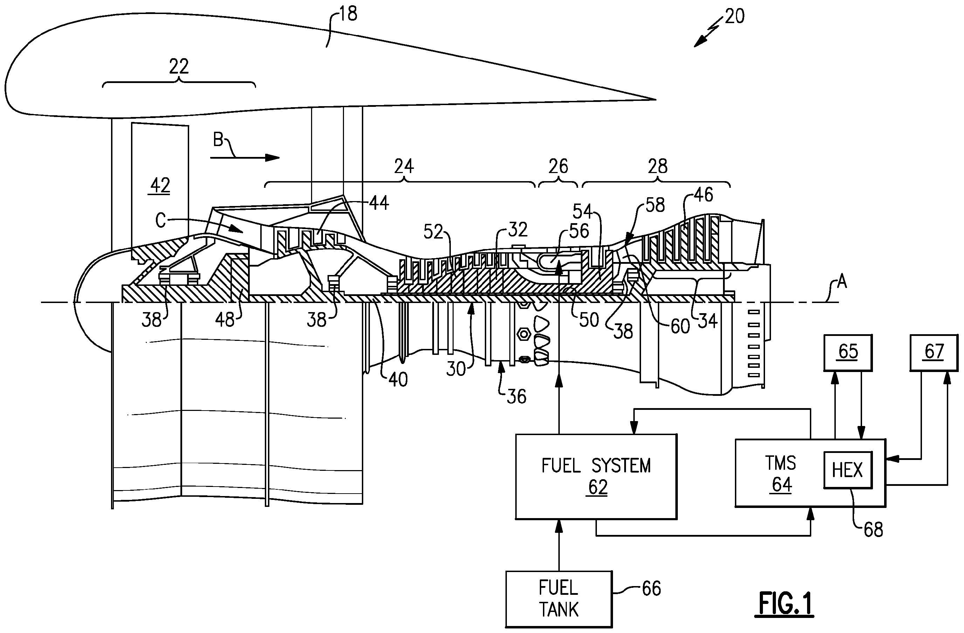

Figure 1 schematically illustrates a gas turbine engine 20 for powering an aircraft. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including but not limited to three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that the various bearing systems 38 may alternatively or additionally be provided at different locations, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to a fan section 22 through a speed change mechanism, which in exemplary gas turbine engine 20 is illustrated as a geared architecture 48 to drive fan blades 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion of the combustion gases. It will be appreciated that each of the positions of the fan section 22, compressor section 24, combustor section 26, turbine section 28, and fan drive gear system 48 may be varied. For example, gear system 48 may be located aft of the low pressure compressor 44 and the fan blades 42 may be positioned forward or aft of the location of the geared architecture 48 or even aft of turbine section 28.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five (5:1). The low pressure turbine 46 pressure ratio is pressure measured prior to the inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including but not limited to direct drive turbofans.

The majority of the thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about (1.45:1). "Low corrected fan tip speed" is the actual fan tip speed in ft/sec divided by an industry standard temperature correction of [(Tram °R) / (518.7 °R)] ^{0.5} (where °R = K x 9/5). The "Low corrected fan tip speed" as disclosed herein according to one non-limiting embodiment is less than about 1150 ft/s (350.5 m/s).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 5 turbine rotors schematically indicated at 34. In another disclosed embodiment, the low pressure turbine includes about 6 rotors. In another non-limiting example embodiment, the low pressure turbine 46 includes about 3 turbine rotors. In yet another disclosed embodiment, the number of turbine rotors for the low pressure turbine 46 may be between 3 and 6. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

A fuel system 62 delivers fuel from a fuel tank 66 to the combustor 56. Fuel provides a favorable medium for transference of thermal energy because the resulting preheated fuel provides for increased combustor efficiency. A portion of fuel from the fuel system 62 is provided to a thermal management system (TMS) 64 for use as heat sink to absorb heat from other engine systems. Other engine systems can include a buffer air system and/or environmental control systems schematically indicated at 67. The engine systems may include a lubrication system a schematically indicated at 65. Lubricant flows and air flows are cooled by the TMS 64 to maintain temperatures within predefined limits. The example TMS 64 may include various passages, filters, screens, pressure sensors, temperature sensors, valves, and pumps to communicate the hot flows into thermal communication with a coolant. In this example, the fuel system 62 provides the fuel flow for use as a coolant. In other examples, other suitable media can be used as a coolant, such as single-phase flow media (e.g., hydraulic fluid) and/or two-phase flow media (e.g., refrigerants, water, refrigerant/water mixtures, etc.). As appreciated, although not shown, temperature sensors may be used to detect temperatures in the hot flows and in the coolant. Furthermore, as appreciated, although not shown, these detected temperatures signals may be sent to on-board controllers (e.g., Electronic Engine Control-EEC/Full Authority Digital Engine Control-FADEC) which, in turn, may provide control outputs to various TMS components, thus allowing the TMS 64 to maintain said predefined temperature limits in hot flows and in coolant. The TMS 64 includes a heat exchanger 68 that places hot flows in thermal communication with the coolant. An example disclosed embodiment includes at least one heat exchanger 68 that provides for cooling of several hot flows within a single compact structure. As is appreciated, one or several heat exchangers 68 could be included to place a coolant flow (e.g., fuel) into thermal communication with hot flows (e.g., lubricant flow and air flow) that require cooling.

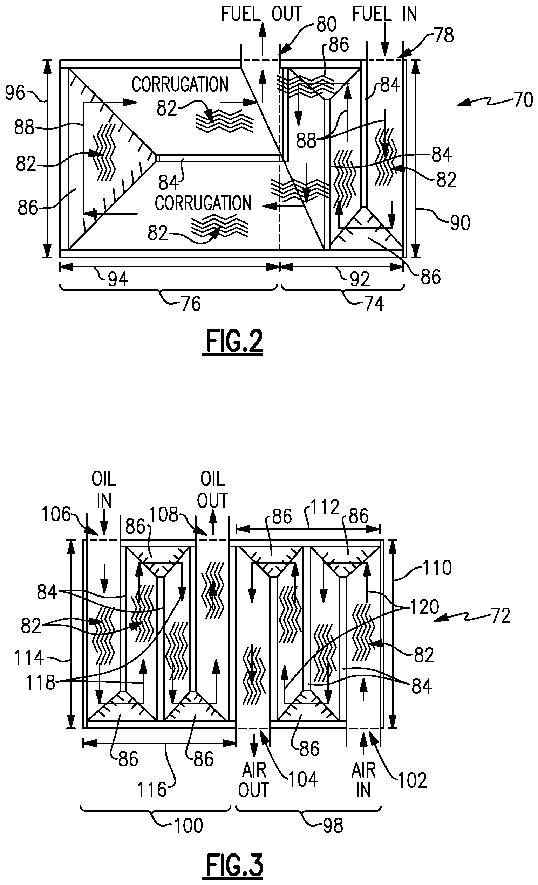

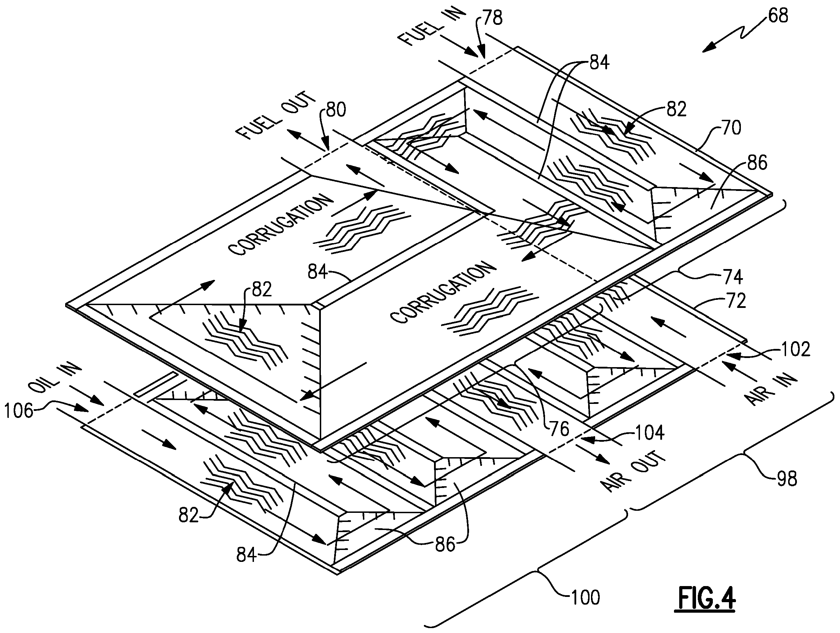

Referring to Figures 2, 3 and 4, the example heat exchanger 68 places a coolant into thermal communication with more than one hot flow. In this disclosed example, a lubricant flow 118 and an air flow 120 are cooled by a fuel flow 88. The example heat exchanger 68 includes a first plate 70 for the coolant flow, fuel in this example, and a second plate 72 for the flows to be cooled, lubricant and air in this example. The first and second plates 70, 72 are stacked against each other to provide thermal communication. The plates 70, 72 are formed as separate parts and multiple ones of the first and second plates 70, 72 are assembled together to provide a desired flow capacity of the heat exchanger 68.

The plates 70, 72 may be formed as cast metal material or from a plastic material compatible with the temperature ranges of the flows. The plates 70, 72 may be machined from metal material. The plates 70, 72 may be formed using molding or additive manufacturing methods as well as other known manufacturing and forming processes.

Each of the plates 70, 72 includes a plurality of passages or channels 82 (hereafter referred to as "channels") that define a flow path for the corresponding flows. The channels 82 are shown in a herringbone pattern. The herringbone pattern is a wavy pattern of walls that increases a surface area for thermal transfer through the plates 70, 72. The channels 82 may be formed in other patterns that accentuate thermal transfer between the coolant and hot flows.

Spacer bars 84 are provided within each of the plates 70, 72 to define a direction of flow through the channels. The spacer bars 84 also define the number of passes that each flow will make for a defined area. The more passes of flow in a defined area, the more thermal transfer that occurs.

The number of passes defined by the spacer bars in the example plates 70 is varied to tailor thermal transfer to application specific requirements. In the disclosed example, the first plate 70 includes a first cool portion 74 and a second cool portion 76. The first cool portion 74 includes a width 92 and a length 90 that define a first flow area. The second cool portion 76 includes a width 94 and a length 96 that defines a second flow area.

The first cool portion 74 includes more spacer bars 84 than is provided in the second cool portion 76 such that the first cool portion 74 includes more passes of the fuel coolant. The increased number of passes also means that fuel is within the first cool portion 74 for a longer duration than fuel flow in the second cool portion 76. The increased or greater duration of fuel time in the first cool portion 74 provides different rates of thermal transfer in the different portions 74, 76.

The disclosed second plate 72 includes a first hot portion 98 that is in thermal communication with the first cool portion 74 of the first plate 70. A second hot portion 100 of the second plate 72 is in thermal communication with the second cool portion 76 of the first plate 70. In this example, the first hot portion 98 receives an airflow 120 through an inlet 102. The first hot portion 98 includes the channels 82 and spacer bars 84 to define a number of passes the airflow 102 takes before exiting through the outlet 104.

The first hot portion 98 includes a length 110 and a width 112 that define an area for the airflow 120 and for thermal transfer with the coolant flow in the first plate 70. In this example, an area of the first hot portion 98 and an area of the first cool portion 74 are the same. Similarly, the second hot portion 100 includes a width 116 and a length 114 that define and area for thermal transfer with coolant in the second cool portion 76. In this example, the second hot portion 100 receives a lubricant flow 118 through an inlet 106. The second hot portion 100 includes the channels 82 and spacer bars 84 to define a number of passes the lubricant flow 118 takes before exiting through the outlet 108. The area of the second cool portion 76 and the second hot portion 100, in this example are the same. It should be appreciated that different relative areas between the first plate 70 and the second plate 72 could be utilized and are within the scope and contemplation of this disclosure.

The increased number of passes defined by the example first hot portion 98 and the first cool portion 74 provide a different rate of thermal transfer between the airflow 120 and the fuel flow 88 as compared to the a rate of thermal transfer between lubricant flow 118 and the fuel flow 88. The amount of thermal transfer into the fuel within the first hot portion is increased due to the increased amount of time the fuel is present within the first cool portion 74. Fuel flow from the first cool portion 74 flows into the second cool portion 76 and absorbs additional thermal energy from the lubricant flow 118.

In the disclosed example first plate 70 the spacer bars 84 in the first cool portion 74 are transverse to the spacer bars 84 disposed in the second cool portion 76. The different flow directions are defined to provide a desired resident time within each portion 74, 76 to tailor thermal transfer to application specific requirements. The first plate 70 provides the inlet 78 and the outlet 80 on a common side to simplify assembly.

The second plate 72 includes spacer bars 84 that are all parallel to each other to define parallel paths for lubricant flow 118 and the airflow 120. In this disclosed example, the coolant flow in the first cool portion 74 is counter to the airflow 120 in the first hot portion 98. The flow of fuel 88 in the second cool portion 76 is transverse to lubricant flow 118 in the second hot portion 100. The direction of flows is disclosed by way of example and may be provided in different relative directions within the scope and contemplation of this disclosure.

A mitered portion 86 defines a transition between passes of each flow between the spacer bars 84. Each of the mitered portions 86 include channels 82 to aid in thermal transfer. The mitered portions 86 contain the transition between the different passes within each of the plates 70, 72 to simplify the structure and assembly of the heat exchanger 68.

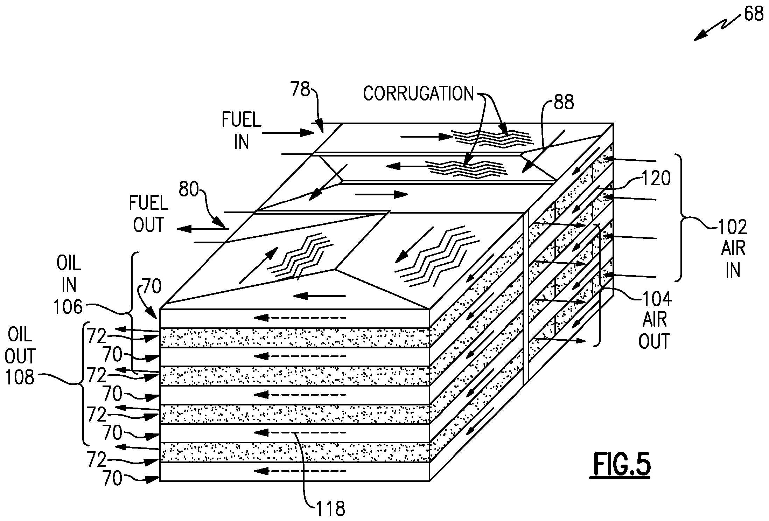

Referring to Figure 5, with continued reference to Figures 2-4, the heat exchanger 68 is scalable to accommodate different thermal transfer and cooling requirements. The first and second plates 70, 72 are stacked in an alternating manner such that each of the second plates 72 are disposed between one of the first plates 70. The plates 70, 72 are stacked such that all of the inlets and outlet for a specific flow are aligned on a common side. In this example, all the air inlets 102 and air outlets 104 are on one side and all of the lubricant inlets 106 and outlets 108 are on an opposite side. All the inlets 78 and the outlets 80 for the fuel are provided on a common side. Suitable piping and conduits would be provided to communicate each flow (e.g., fuel flow 88, lubricant flow 118, and air flow 120) from the corresponding system to and from the heat exchanger 68.

The example heat exchanger 68 incorporates several flows for cooling into a common assembly and is configurable to tailor thermal transfer to the temperatures of each individual flow.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A heat exchanger (68) for a gas turbine engine (20) comprising:
a first plate (70) for a coolant medium, the first plate (70) including a first cool portion (74), a second cool portion (76), a coolant inlet (78) and a coolant outlet (80), the coolant inlet (78) and the coolant outlet (80) disposed on a common side, and
a second plate (72) in thermal communication with the first plate (70),
each of the plates (70, 72) includes a plurality of channels (82) that define a flow path for the corresponding flows,
spacer bars (84) are provided within each of the plates (70, 72) to define a direction of flow through the channels, the spacer bars (84) also define the number of passes that each flow will make for a defined area,
the first cool portion (74) includes more spacer bars (84) than is provided in the second cool portion (76) such that the first cool portion (74) includes more passes of the coolant medium than the second cool portion (76),
the heat exchanger being **characterised in that**:
the second plate (72) includes a first hot portion (98) including a first inlet (102) for a flow of air and a first outlet (104) and a second hot portion (100) including a second inlet (106) for a flow of lubricant and a second outlet (108), wherein the first cool portion (74) is in thermal communication with the first hot portion (98) and the second cool portion (76) is in thermal communication with the second hot portion (100);
wherein the first hot flow comprises a flow of air and the second hot flow comprises a flow of oil; and
the first cool portion (74) and the first hot portion (98) have a common width (92, 112) and a common length (90, 110) in parallel planes.

2. The heat exchanger as recited in claim 1, wherein a direction of a flow of the coolant medium (88) through the first cool portion (74) is counter to a direction of a first hot flow (120) in the first hot portion (98).

3. The heat exchanger as recited in claim 1 or 2, wherein the more spacer bars (84) in the first cool portion (74) than the second cool portion (76) defines more parallel turning passes in the first cool portion (74) than the second cool portion (76).

4. The heat exchanger as recited in claim 3, wherein each turning pass is defined by a mitered portion (86) including an angled interface with a corresponding channel (82).

5. The heat exchanger as recited in any of claims 1to 4, wherein the first inlet (102) and the first outlet (104) of the second plate (72) are on a side of the second plate (72) opposite the second inlet (106) and the second outlet (108).

6. The heat exchanger as recited in any of claims 1 to 5, wherein each of the first plate (70) and the second plate (72) include channels (82) defining a path of fluid flow (88,120, 118) and the channels (82) have a herringbone pattern wherein a herring bone pattern is a wavy pattern of walls that increases a surface area for thermal transfer through the first and second plates (70, 72).

7. The heat exchanger as recited in any of claims 1 to 6, wherein the coolant medium comprises one of fuel, hydraulic fluid, a refrigerant and/or airflow.

8. The heat exchanger as recited in any of claims 1 to 7, including a plurality of first plates (70) and a plurality of second plates alternated (72) such that each of the plurality of second plates (72) is disposed between one of the plurality of first plates (70).

9. The heat exchanger as recited in claim 8, wherein each of the plurality of first plates (70) are orientated such that each coolant inlet (78) and each coolant outlet (80) for each of the plurality of first plates (70) are disposed on a common side.

10. A thermal management system for a gas turbine engine comprising:
a heat exchanger according to any of claims 1 to 9.

## Patentansprüche

1. Wärmetauscher (68) für ein Gasturbinentriebwerk (20), umfassend:
eine erste Platte (70) für ein Kühlmittelmedium, wobei die erste Platte (70) einen ersten Kühlabschnitt (74), einen zweiten Kühlabschnitt (76), einen Kühlmitteleinlass (78) und einen Kühlmittelauslass (80) beinhaltet, wobei der Kühlmitteleinlass (78) und der Kühlmittelauslass (80) auf einer gemeinsamen Seite angeordnet sind, und
eine zweite Platte (72), die in thermischer Verbindung mit der ersten Platte (70) steht,
wobei jede der Platten (70, 72) eine Vielzahl von Kanälen (82) beinhaltet, die einen Stromweg für die entsprechenden Ströme definieren,
wobei Abstandshalter (84) in jeder der Platten (70, 72) vorgesehen sind, um eine Strömungsrichtung durch die Kanäle zu definieren, wobei die Abstandshalter (84) auch die Anzahl der Fluten definieren, die jeder Strom in einem bestimmten Bereich durchläuft,
wobei der erste Kühlabschnitt (74) mehr Abstandshalter (84) beinhaltet als in dem zweiten Kühlabschnitt (76) vorgesehen, derart dass der erste Kühlabschnitt (74) mehr Fluten des Kühlmittelmediums beinhaltet als der zweite Kühlabschnitt (76), wobei der Wärmetauscher **dadurch gekennzeichnet ist, dass**:
die zweite Platte (72) einen ersten Heißabschnitt (98) beinhaltend einen ersten Einlass (102) für einen Luftstrom und einen ersten Auslass (104) und einen zweiten Heißabschnitt (100) beinhaltend einen zweiten Einlass (106) für einen Schmiermittelstrom und einen zweiten Auslass (108) beinhaltet, wobei der erste Kühlabschnitt (74) in thermischer Verbindung mit dem ersten Heißabschnitt (98) und der zweite Kühlabschnitt (76) in thermischer Verbindung mit dem zweiten Heißabschnitt (100) steht;
wobei der erste Heißstrom einen Luftstrom und der zweite Heißstrom einen Ölstrom umfasst; und
der erste Kühlabschnitt (74) und der erste Heißabschnitt (98) eine gemeinsame Breite (92, 112) und eine gemeinsame Länge (90, 110) in parallelen Ebenen aufweisen.

2. Wärmetauscher nach Anspruch 1, wobei eine Stromrichtung des Kühlmittelmediums (88) durch den ersten Kühlabschnitt (74) einer Richtung eines ersten Heißstroms (120) in dem ersten Heißabschnitt (98) entgegengesetzt ist.

3. Wärmetauscher nach Anspruch 1 oder 2, wobei die größere Anzahl von Abstandshaltern (84) in dem ersten Kühlabschnitt (74) als in dem zweiten Kühlabschnitt (76) mehr parallele Drehfluten in dem ersten Kühlabschnitt (74) als in dem zweiten Kühlabschnitt (76) definiert.

4. Wärmetauscher nach Anspruch 3, wobei jede Drehflut durch einen auf Gehrung geschnittenen Abschnitt (86) definiert ist, der eine abgewinkelte Schnittstelle mit einem entsprechenden Kanal (82) beinhaltet.

5. Wärmetauscher nach einem der Ansprüche 1 bis 4, wobei der erste Einlass (102) und der erste Auslass (104) der zweiten Platte (72) auf einer Seite der zweiten Platte (72) liegen, die dem zweiten Einlass (106) und dem zweiten Auslass (108) gegenüberliegt.

6. Wärmetauscher nach einem der Ansprüche 1 bis 5, wobei sowohl die erste Platte (70) als auch die zweite Platte (72) Kanäle (82) beinhalten, die einen Fluidstromweg (88, 120, 118) definieren, und die Kanäle (82) ein Fischgrätenmuster aufweisen, wobei ein Fischgrätenmuster ein wellenförmiges Muster von Wänden ist, das einen Oberflächenbereich für die thermische Übertragung durch die erste und zweite Platte (70, 72) vergrößert.

7. Wärmetauscher nach einem der Ansprüche 1 bis 6, wobei das Kühlmittelmedium einen der folgenden Stoffe umfasst: Kraftstoff, Hydraulikflüssigkeit, ein Kältemittel und/oder Luftstrom.

8. Wärmetauscher nach einem der Ansprüche 1 bis 7, beinhaltend eine Vielzahl von ersten Platten (70) und eine Vielzahl von zweiten Platten (72), die sich derart abwechseln, dass jede der Vielzahl von zweiten Platten (72) zwischen einer der Vielzahl von ersten Platten (70) angeordnet ist.

9. Wärmetauscher nach Anspruch 8, wobei jede der Vielzahl von ersten Platten (70) derart ausgerichtet ist, dass jeder Kühlmitteleinlass (78) und jeder Kühlmittelauslass (80) für jede der Vielzahl von ersten Platten (70) auf einer gemeinsamen Seite angeordnet sind.

10. System zur thermischen Verwaltung für ein Gasturbinentriebwerk, umfassend:
einen Wärmetauscher nach einem der Ansprüche 1 bis 9.

## Revendications

1. Échangeur de chaleur (68) pour un moteur à turbine à gaz (20), comprenant :
une première plaque (70) pour un milieu de refroidissement, la première plaque (70) comportant une première partie froide (74), une seconde partie froide (76), une entrée de liquide de refroidissement (78) et une sortie de liquide de refroidissement (80), l'entrée de liquide de refroidissement (78) et la sortie de liquide de refroidissement (80) disposées sur un côté commun, et
une seconde plaque (72) en communication thermique avec la première plaque (70),
chacune des plaques (70, 72) comporte une pluralité de canaux (82) qui définissent un chemin d'écoulement pour les flux correspondants,
des barres d'espacement (84) sont prévues à l'intérieur de chacune des plaques (70, 72) pour définir une direction d'écoulement à travers les canaux, les barres d'espacement (84) définissent également le nombre de passages que chaque flux effectuera pour une zone définie,
la première partie froide (74) comporte plus de barres d'espacement (84) que celles prévues dans la seconde partie froide (76), de sorte que la première partie froide (74) comporte plus de passages du milieu réfrigérant que la seconde partie froide (76), l'échangeur de chaleur étant **caractérisé en ce que**
la seconde plaque (72) compote une première partie chaude (98) comportant une première entrée (102) pour un flux d'air et une première sortie (104) et une seconde partie chaude (100) comportant une seconde entrée (106) pour un flux de lubrifiant et une seconde sortie (108), dans lequel la première partie froide (74) étant en communication thermique avec la première partie chaude (98) et la seconde partie froide (76) étant en communication thermique avec la seconde partie chaude (100). dans lequel le premier flux chaud comprend un flux d'air et le second flux chaud comprend un flux d'huile ; et
la première partie froide (74) et la première partie chaude (98) ont une largeur commune (92, 112) et une longueur commune (90, 110) dans des plans parallèles.

2. Échangeur de chaleur selon la revendication 1, dans lequel la direction d'un écoulement du milieu réfrigérant (88) à travers la première partie froide (74) est contraire à la direction d'un premier écoulement chaud (120) dans la première partie chaude (98).

3. Échangeur de chaleur selon la revendication 1 ou 2, dans lequel plus il y a de barres d'espacement (84) dans la première partie froide (74) que dans la seconde partie froide (76), plus il y a de passages de rotation parallèles dans la première partie froide (74) que la seconde partie froide (76).

4. Échangeur de chaleur selon la revendication 3, dans lequel chaque passage de rotation est définie par une partie en onglet (86) comportant une interface inclinée avec un canal correspondant (82).

5. Échangeur de chaleur selon l'une quelconque des revendications 1 à 4, dans lequel la première entrée (102) et la première sortie (104) de la seconde plaque (72) se trouvent sur un côté de la seconde plaque (72) opposé à la seconde entrée (106) et à la seconde sortie (108).

6. Échangeur de chaleur selon l'une quelconque des revendications 1 à 5, dans lequel chacune de la première plaque (70) et de la seconde plaque (72) comporte des canaux (82) définissant un trajet d'écoulement de fluide (88, 120, 118) et les canaux (82) présentent un motif à chevrons, dans lequel un motif à chevrons est un motif ondulé de parois qui augmente une surface pour le transfert thermique à travers les première et seconde plaques (70, 72).

7. Échangeur de chaleur selon l'une quelconque des revendications 1 à 6, dans lequel le milieu de refroidissement comprend du carburant, du fluide hydraulique, un réfrigérant et/ou un flux d'air.

8. Échangeur de chaleur selon l'une quelconque des revendications 1 à 7, comportant une pluralité de premières plaques (70) et une pluralité de secondes plaques alternées (72) de sorte que chacune de la pluralité de secondes plaques (72) est disposée entre une de la pluralité de premières plaques (70) .

9. Échangeur de chaleur selon la revendication 8, dans lequel chacune de la pluralité de premières plaques (70) est orientée de sorte que chaque entrée de liquide de refroidissement (78) et chaque sortie de liquide de refroidissement (80) pour chacune de la pluralité de premières plaques (70) sont disposées sur un côté commun.

10. Système de gestion thermique d'un moteur à turbine à gaz comprenant :
un échangeur de chaleur selon l'une quelconque des revendications 1 à 9.
